# DEMANDE DE BREVET EUROPEEN

(11) **EP 4 579 506 A1**
(43) Date de publication de la demande: **02.07.2025**
(21) Numéro de dépôt: 24223287.4
(22) Date de dépôt: 26.12.2024
(51) Int. Cl.: G06F 21/62, G06N 20/00, G06F 16/901

(54) **PROCÉDÉ DE COMPARAISON DE DONNÉES ANONYMISÉES, DISPOSITIFS ET PROGRAMME CORRESPONDANT**

(30) Priorité: 26.12.2023 FR 2315300
(71) Demandeur: THALES, 92190 Meudon (FR)
(72) Inventeur: Delavallade, Thomas, 33700 MERIGNAC (FR); PORTELLI, Geoffrey, 06560 VALBONNE (FR); FLORY, Pierre-Elisee, 91767 PALAISEAU CEDEX (FR); KAPUSTA, Katarzyna, 91767 PALAISEAU CEDEX (FR); FREICHE, Arthur, 06560 VALBONNE (FR); BETTAN, Olivier, 91767 PALAISEAU CEDEX (FR)
(74) Mandataire: Lavoix

(57) **Abrégé**

La présente invention concerne un procédé de traitement d'une signature d'un élément numérique comprenant :
- une étape de réception (E10) d'une requête (RQ) portant sur ledit élément numérique (DRSig), en provenance d'un dispositif électronique requérant (DEr1) ;
- une étape de diffusion (E20), auprès de dispositifs électroniques répondants (DEr2, DEr3, DEr4), d'une signature dudit élément numérique (DRSig) ;
- une étape de réception (E30), en provenance des dispositifs répondants, de réponses (RT) issues d'une comparaison entre la signature et au moins une signature d'éléments numériques (DRSig) ;
- une étape d'agrégation (E40) de l'ensemble des réponses (RT) dans une structure de données agrégée (StRTa) ;
- une étape de transmission (E50) de la structure de données agrégée audit dispositif requérant (DEr1).

## Description

L'invention se rapporte à la protection de données à caractère sensible. L'invention se rapporte plus particulièrement à la protection de données à caractère sensible dans un contexte d'échange, entre intervenants potentiellement concurrents, de telles données.

La numérisation de l'économie entraine la mise en oeuvre quasi systématique de procédures dématérialisées pour toutes les démarches du quotidien. L'interaction physique entre deux protagonistes est progressivement remplacée par une interaction numérique. Les protagonistes peuvent toujours continuer à se rencontrer ou à échanger, mais ces rencontres et échanges se font essentiellement par l'intermédiaire de plateformes numériques. Par exemple, l'ouverture d'un compte bancaire ne nécessite plus de se rendre dans une agence et de rencontrer physiquement un conseiller.

Ces nouvelles pratiques commerciales entrainent dans leur sillage une augmentation de la fraude, et plus particulièrement de la fraude à l'identité. En effet, se voyant libéré des contraintes de rencontres physiques, les fraudeurs ont la possibilité d'utiliser de faux documents numérisés. Ainsi, dans le secteur bancaire notamment, on assiste à une recrudescence des fraudes sur comptes bancaires et ce malgré les outils d'analyse préventive existants. Trois cas de fraude électronique représentent à eux seuls 80% des fraudes (virement sur des IBAN frauduleux, identité falsifiée, documents justifiant des revenus falsifiés).

La prévention de ces fraudes fait face à des problèmes technologiques et réglementaires importants. Idéalement, pour éviter les problèmes liés à la fraude à la réplication, il serait intéressant que les parties prenantes (i.e. les établissements bancaires dans ce cas), soient en mesure d'échanger des éléments numériques relatifs aux fraudeurs de sorte à créer une base mutualisée de données. Dans le secteur bancaire, par exemple, les problématiques de fraude à la réplication pourraient être résolues au travers du partage de certaines données liées à des fraudes reconnues : IBAN (cas simple), documents de type image-documents d'identité et certains documents client (e.g. extraits de compte). En effet, une même photo, celle du fraudeur, peut par exemple se retrouver sur des cartes d'identité falsifiées et servir à ouvrir plusieurs comptes à des noms différents. De même le partage d'extraits de compte falsifiés, qui sont exploités par les fraudeurs pour justifier de l'attribution d'instruments de paiement avantageux (découvert, capacité de retrait, ...), pourrait être une solution.

Ce type de partage, cependant, est difficile à mettre en oeuvre, et ce pour plusieurs raisons : par exemple les contraintes réglementaires imposent que chaque banque conserve ses données (pas de constitution d'une base centralisée possible) et que seules des données parfaitement anonymisées, ne permettant pas de remonter aux données d'origine puissent être échangées. Par ailleurs, la sécurité de tels partages devrait être parfaitement assurée, ce qui pose également des problèmes techniques importants.

Sur une telle plateforme, il s'agit en outre pour gagner la confiance des partenaires de garantir l'anonymat des banques émettant des requêtes (pour savoir si une autre banque a déjà repéré une photo donnée comme associée à une tentative de fraude avérée) ainsi que celui des banques répondant à ces requêtes.

La situation qui vient d'être décrite dans le cas du secteur bancaire est également transposable dans le domaine de la sécurité ou de la coopération entre états participant à une même fédération. En effet, des entités alliées peuvent avoir le besoin de partager des données sensibles, par exemple pour identifier telle ou telle menace (e.g. terroriste, militaire) tout en garantissant que cet échange ne vienne pas indument divulguer des données ou information qu'un état ne souhaiterait pas partager. C'est par exemple le cas lors de partages de données issues d'écoutes téléphoniques, dans le but d'identifier une personne en particulier. On peut retrouver une telle situation de besoins d'échanges de données dans d'autres contextes civils.

A ce jour, pour répondre à ces situations, la solution existante consiste, pour chaque entité d'un groupe, à interroger individuellement toutes les autres entités en transmettant l'élément numérique, ce qui ne permet pas de garantir l'anonymat de l'entité requérante et de l'entité répondante : en effet, l'entité requérante et l'entité répondant échangent directement des éléments numériques, ce qui implique que chacune des entités sait exactement qui interroge et qui répond et pour quel élément numérique.

Il existe donc un besoin d'une solution technique qui permette, pour un groupe composée d'entités, à une entité requérante d'obtenir une confirmation ou une infirmation de la présence d'une donnée sensible (par exemple une donnée relative à l'identité) dans une base de données d'une ou de plusieurs autres entités répondantes, sans qu'il soit possible, pour ces entités (requérantes, répondantes), de reconstruire tout ou partie de la base d'une autre entité du groupe. Il est donc nécessaire de résoudre un problème technique de partage anonyme de données entre plusieurs entités appartenant à un groupe d'entités. De manière additionnelle, il est nécessaire de prévenir la reconstruction, par une entité du groupe, d'une base de données à partir des données anonymes transmises par les autres entités.

L'invention a alors pour objet un procédé de traitement d'une signature d'un élément numérique, procédé mis en oeuvre par un dispositif électronique de traitement qui est connecté à un réseau de communication auquel un groupe de dispositifs électroniques est également connecté, ledit procédé comprenant :
- une étape de réception d'une requête, en provenance d'un dispositif électronique requérant, ladite requête portant sur ledit élément numérique ;
- une étape de diffusion, auprès d'une pluralité de dispositifs électroniques répondants connectés au réseau de communication, d'une signature dudit élément numérique ;
- une étape de réception, en provenance des dispositifs électroniques répondants, de réponses issues d'une comparaison entre la signature dudit élément numérique et au moins une signature d'éléments numériques en possession dudit au moins un dispositif électronique répondant ;
- une étape d'agrégation de l'ensemble des réponses au sein d'une structure de données de réponse agrégée ;
- une étape de transmission de la structure de données de réponse agrégée audit dispositif électronique requérant.

Autrement formulé, le procédé est un procédé de permettant à un dispositif électronique requérant appartenant à un groupe de dispositifs électroniques, de disposer d'une réponse à une requête portant sur la présence d'un élément numérique dans au moins une base de données d'un autre dispositif électronique du groupe, le procédé mis en oeuvre par un dispositif électronique de traitement qui est connecté à un réseau de communication auquel le groupe de dispositifs électroniques est également connecté, le dispositif électronique de traitement étant indépendant du groupe de dispositifs électroniques, ledit procédé comprenant :
- une étape de réception de la requête par le dispositif électronique de traitement, en provenance du dispositif électronique requérant,
- une étape de diffusion par le dispositif électronique de traitement, auprès d'une pluralité de dispositifs électroniques répondants connectés au réseau de communication, d'une signature dudit élément numérique,
- une étape de réception par le dispositif électronique de traitement, en provenance des dispositifs électroniques répondants, de réponses issues d'une comparaison entre la signature dudit élément numérique et au moins une signature d'éléments numériques en possession dudit au moins un dispositif électronique répondant,
- une étape d'agrégation par le dispositif électronique de traitement de l'ensemble des réponses au sein d'une structure de données de réponse agrégée, et
- une étape de transmission par le dispositif électronique de traitement, de la structure de données de réponse agrégée audit dispositif électronique requérant.

Suivant des mises en oeuvre particulières, le procédé comporte l'une ou plusieurs des caractéristiques suivantes :
- ladite signature dudit élément numérique se présente sous la forme d'une chaine de caractères ;
- il comprend en outre une étape de préparation de ladite signature dudit élément numérique comprenant :
   - une étape d'extraction de caractéristiques à partir dudit élément numérique, délivrant un vecteur caractéristique ;
   - une étape de multiplication dudit vecteur caractéristique par une matrice de hachage prédéterminée, délivrant un vecteur caractéristique haché ;
   - une étape de hachage binaire dudit vecteur caractéristique haché délivrant un vecteur caractéristique binaire, ce vecteur caractéristique binaire constituant ladite signature dudit élément numérique.
   - l'étape d'extraction de caractéristiques à partir dudit élément numérique comprend :
      - une pluralité d'étapes de modification dudit élément numérique, chaque étape délivrant un élément numérique modifié ;
      - une étape d'extraction de caractéristiques à partir de chacun des éléments numériques modifiés, délivrant un ensemble de vecteurs caractéristiques modifiés ;
      - une étape de calcul d'un vecteur caractéristique global en agrégeant chacun des vecteurs caractéristiques modifiés.
      - la comparaison entre la signature dudit élément numérique et ladite au moins une signature d'éléments numériques dudit au moins un dispositif électronique répondant comprend une étape de calcul d'une distance entre la signature dudit élément numérique et ladite au moins une signature d'éléments numériques en possession dudit au moins un dispositif électronique répondant ;
      - la distance calculée est une distance de Hamming ;
      - la comparaison entre la signature dudit élément numérique et ladite au moins une signature d'éléments numériques dudit au moins un dispositif électronique répondant est mise en oeuvre en utilisant un protocole de type ensemble privé intersection ;
      - ledit élément numérique appartient au groupe comprenant : une image numérique, une vidéo, un extrait sonore et un texte ;

L'invention a en outre pour objet un dispositif électronique de traitement d'une signature d'un élément numérique, le dispositif électronique de traitement comprenant :
- des moyens de réception d'une requête, en provenance d'un dispositif électronique requérant, ladite requête portant sur ledit élément numérique ;
- des moyens de diffusion, auprès d'une pluralité de dispositifs électroniques répondants connectés au réseau de communication, d'une signature dudit élément numérique ;
- des moyens de réception, en provenance d'au moins un dispositif électronique répondant, d'au moins une réponse issue d'une comparaison entre la signature dudit élément numérique et au moins une signature d'éléments numériques en possession dudit au moins un dispositif électronique répondant ;
- des moyens d'agrégation de l'ensemble des réponses au sein d'une structure de données de réponse agrégée ;
- des moyens de transmission de la structure de données de réponse agrégée audit dispositif électronique requérant.

Elle a enfin pour objet un programme d'ordinateur comportant des instructions logicielles qui, lorsqu'elles sont exécutées par un dispositif électronique programmable, mettent en oeuvre un procédé de traitement tel que défini ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 illustre un système comprenant des dispositifs électroniques et un serveur de traitement pour la mise en oeuvre du procédé de traitement de signature d'éléments numériques.
- la figure 2 illustre les composants logiciels ou matériels d'un dispositif électronique ;
- la figure 3 illustre l'architecture physique d'un dispositif électronique et du serveur de traitement ;
- la figure 4 est un schéma de l'installation complète illustrant les flux lors du procédé de traitement de signatures d'éléments numériques au sein du serveur de traitement ;
- la figure 5 illustre les différentes étapes de mise en oeuvre de l'interrogation des dispositifs électronique dans le système de la figure 1.

### Description

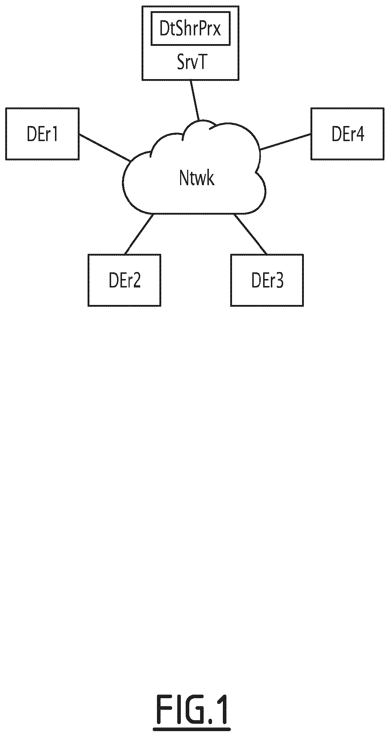

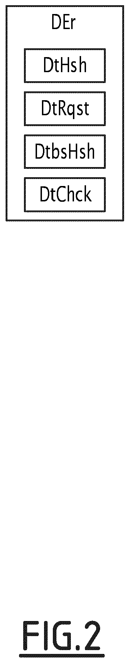

On présente, en relation avec les figure 1, 2 et 3, l'architecture d'un système apte à mettre en oeuvre le procédé objet de la présente divulgation, ainsi que l'architecture des dispositifs électroniques composant ce système. Un tel système comprend un serveur de traitement SrvT connecté à une pluralité de dispositifs électroniques DEr1, DEr2, DEr3, DEr4, etc. par l'intermédiaire d'un réseau de communication Ntwk.

Le serveur de traitement SrvT comprend : des moyens de réception d'une requête, en provenance d'un dispositif électronique requérant (au sein du groupe comprenant la pluralité de dispositifs électroniques), la requête comprenant une signature d'un élément numérique ; des moyens de diffusion, auprès des dispositifs électroniques répondants, appartenant au groupe, connectés au réseau de communication, de la signature de l'élément numérique ; des moyens de réception, en provenance des dispositifs électroniques répondant, des réponses issues d'une comparaison entre la signature de l'élément numérique et une signature d'éléments numériques du dispositif électronique répondant ; des moyens d'agrégation de l'ensemble des réponses au sein d'une structure de données de réponse agrégée ; des moyens de transmission de la structure de données de réponse agrégée audit dispositif électronique requérant.

Ces moyens sont essentiellement implémentés sous la forme d'un composant (matériel ou logiciel en fonction des circonstances de mise en oeuvre), appelé composant d'intermédiation DtShrPrx qui effectue l'intermédiaire entre chaque dispositif et le reste des dispositifs du groupe. Il permet de réceptionner les requêtes des différents dispositifs, de les retransmettre aux autres dispositifs du groupe (assurant ainsi l'anonymat des requérants), d'agréger les réponses fournies par les différents dispositifs du groupe (sans identification de ces différents dispositifs répondants) et de renvoyer la réponse agrégée au requêtant (assurant ainsi l'anonymat des répondants). Ce composant permet de garantir l'anonymat des dispositifs du groupe dans le cadre d'un partage de données sensibles au sein d'un groupe.

De plus, les dispositifs électroniques du groupe Der1, Der2, etc. comprennent des moyens de génération de signatures DtHsh pour générer, à partir d'un élément numérique, une signature sous forme de chaîne de caractères ; la signature générée est une représentation de caractéristiques (le signifié) de l'élément numérique fourni en entrée (image, vidéo, son, texte) qui a été construite de telle sorte que deux données similaires ont des signatures finales proches et ainsi une robustesse contre les variations de forme. Ils comprennent également des moyens de transmission de requêtes DtRqst, à destination du serveur de traitement SrvT, ces requêtes comprenant une ou plusieurs signatures issues des moyens de génération ; ces moyens peuvent être implémentés sous la forme d'un service de type REST. Ils comprennent aussi des moyens de construction DtbsHsh d'une base de données de signatures propres, lesquelles données anonymisées sont issues de données en possession du dispositif électronique lui-même (il s'agit de ses propres données, par exemple des données d'identité de ses clients, ou d'autres données relatives à des informations critiques de l'entité). Ils comprennent également des moyens de comparaison DtChck, entre une signature reçue, en provenance du serveur de traitement et une ou plusieurs signatures présentes au sein de la base de données anonymisées.

Ces moyens sont essentiellement mis en oeuvre de la même manière par les dispositifs électroniques du groupe pour parvenir à l'échange de données/réponses. Cela est notamment le cas des moyens de génération de signatures DtHsh et des moyens de comparaison de signatures DtChck reçues de sorte que les signatures puissent être effectivement correctement comparées, selon un protocole de comparaison prédéterminé.

Optionnellement, le serveur de traitement SrvT peut également comprendre des moyens de préparation de la signature d'un élément numérique fourni par un dispositif du groupe lorsque ce dispositif ne dispose pas de moyens de génération de cette signature par exemple. Le serveur de traitement SrvT peut également comprendre des moyens de comparaison entre la signature d'un élément numérique et une ou plusieurs signatures d'éléments numériques des dispositifs électroniques répondants, par exemple en utilisant un protocole de type ensemble privé intersection entre le serveur de traitement et chacun des dispositifs électroniques du groupe.

Optionnellement, chaque dispositif électronique du groupe dispose de son architecture propre au sein de laquelle il a anonymisé les données qu'il souhaite mettre à disposition selon un procédé qui lui est propre. Dans cette situation, chaque entité membre du groupe dispose d'une liberté d'action en terme d'anonymisation des données et de stockage de celles-ci. En conséquence, le serveur de traitement SrvT dispose des informations (sous la forme d'une configuration d'anonymisation) nécessaires à la fourniture, pour chaque dispositif électronique du groupe, de la signature (qui est une forme anonymisée de la question posée) qui convient à son interrogation. En d'autres termes, le serveur de traitement reçoit, de la part du dispositif électronique requérant, une requête comprenant une donnée représentative d'une question (i.e. un élément numérique). Pour chaque dispositif électronique répondant qu'il interroge, le serveur de traitement applique un procédé d'anonymisation de cet élément numérique, qui est fonction des spécificités d'anonymisation du dispositif électronique répondant, et transmet une signature selon les spécificités de chaque dispositif électronique répondant. Cet exemple de réalisation implique des traitements plus complexes au niveau du serveur de traitement mais il présente l'avantage de permettre l'inclusion, au sein du groupe, de dispositifs électroniques qui ne partagent pas nécessairement tous les mêmes exigences au niveau de l'anonymisation.

Ces moyens sont essentiellement implémentés sous la forme de composants, matériels ou logiciels, en fonction des conditions de mise en oeuvre opérationnelles au sein des dispositifs électroniques DEr1, DEr2, DEr3, DEr4, etc ou éventuellement au sein du serveur de traitement SrvT. Les composants sont les suivants (les références ont été conservées) :
- Composant de génération de signature DtHsh, permettant à tout dispositif, pour chaque donnée que celui-ci souhaite partager avec le groupe (pour vérifier si d'autres dispositifs l'ont déjà observée par le passé), de générer une signature sous forme de chaîne de caractères (par exemple sous la forme d'un Hash) dont la longueur est variable en fonction des conditions de mise en oeuvre opérationnelles. La signature générée est caractéristique de la donnée (du signifié) et robuste à des variations dans la forme (le signifiant) de manière à permettre in fine que deux données similaires aient des signatures proches.
   Deux données sont considérées comme similaires si elles sont identiques sur le fond mais pas forcément sur la forme, e.g. deux signaux audio correspondant à la prononciation de la même phrase par deux personnes différentes, deux images représentant une même personne mais qui peut être habillée, coiffée de manière différente, etc.
   Ainsi, la signature permet d'éviter que l'élément numérique ne soit exposé en clair. La signature comprend des caractéristiques de l'élément numérique mais elle ne permet pas de reconstruire cet élément numérique, impliquant ainsi une anonymisation de l'élément numérique.
   Le procédé de génération de signature est naturellement dépendant de la nature des données en entrée. Un exemple de génération adapté au traitement de données d'images, et présentée infra, repose sur l'utilisation d'un réseau de neurones profond pour extraire un vecteur de caractéristiques d'une image (vecteur de nombre flottants). Ce vecteur est ensuite converti en un vecteur binaire via un mécanisme de « locality-sensitive hashing (LSH) », qui est directement convertible en une chaîne de caractères représentant le hash/la signature de l'image. Ce mécanisme est directement transposable pour des données vidéos, textes ou audio en adaptant l'architecture du réseau de neurones ainsi que les données utilisées pour apprendre les poids de cette architecture.
   Pour répondre à l'enjeu de tolérance des signatures aux variations de forme, le procédé de génération de signatures intègre une étape dite de « Data Augmentation » qui consiste à générer de multiples variations de forme de la donnée à anonymiser. A chacune des variations ainsi générées on applique le mécanisme de construction d'une signature/hash. La construction de la signature finale de la donnée à anonymiser est alors construite par agrégation des signatures des différentes variations de la donnée d'origine. La moyenne a été utilisée dans nos implémentations comme opérateur d'agrégation.
   Ce composant joue un rôle important pour garantir l'anonymat du contenu des requêtes échangées au sein du groupe. L'adjonction de l'étape de « Data Augmentation » dans le procédé de génération de la signature est une nouveauté essentielle introduite par notre invention. Elle permet en effet, en jouant sur les transformations appliquées à la donnée d'origine, de moduler la robustesse aux variations de forme que l'on souhaite implémenter en fonction du mécanisme de comparaison entre signatures qui est mis en place (via le composant DtChck, celui-ci influant directement sur les exigences d'anonymisation que l'on peut imposer à la solution).
- Composant de requétage DtRqst : composant permettant à un dispositif électronique de transmettre, au groupe, via le serveur de traitement SrvT, une requête pour vérification de l'existence d'une donnée. Il s'agit par exemple d'un composant se présentant sous la forme d'un service Web (REST) qui permet de transmettre au groupe la donnée qui fait l'objet de la requête après l'avoir anonymisée via le composant DtHsh.
- Composant de gestion de base de données anonymisées DtbsHsh qui permet à tout dispositif de construire une base de données anonymisées à partir des données sensibles qu'il souhaite partager avec le groupe. Il exploite le composant DtHsh pour anonymiser chacune des données de la base et assure la persistance de ces données anonymisées. Un exemple de base de données sensibles dans un contexte bancaire peut être par exemple des données d'images représentant des documents d'identité ayant déjà été identifiés par le passé, par l'organisation gérant le dispositif électronique, comme ayant été impliqués dans une ou plusieurs fraudes.
- Composant de comparaison de signature DtChck permettant à chaque dispositif d'effectuer la comparaison entre l'objet d'une requête de vérification émise par l'un des dispositifs du groupe avec la base de données anonymisées interne de ce dispositif, construite au préalable via le composant DtbsHsh. Cette comparaison permet de savoir si la donnée faisant l'objet de la requête existe ou non dans la base des données sensibles du dispositif.

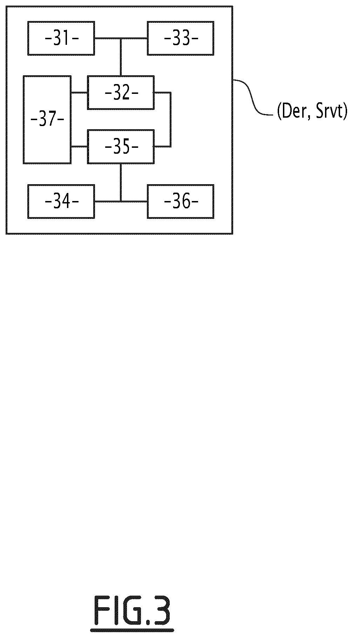

On décrit, en relation avec la figure 3, l'architecture générale d'un dispositif électronique de traitement de données de signatures DEr et/ou d'un serveur de traitement SrvT mis en oeuvre au sein du système précédemment présenté. Par exemple, le dispositif électronique de traitement de données de signatures et/ou le serveur de traitement comprend une mémoire 31 comprenant par exemple une mémoire tampon, un processeur de traitement général 32, équipée par exemple d'un microprocesseur, et piloté par un programme d'ordinateur 33, et/ou une mémoire sécurisée 34, un processeur de traitement sécurisé 35, piloté par un programme d'ordinateur 36, ces processeurs mettent en oeuvre notamment les procédés de traitement, de transmission, d'agrégation des réponses, de génération et de stockage en base de données des signatures d'éléments numériques, éventuellement sous forme de traitements cryptographiques, à l'aide des composants précédemment décrits.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins un élément numérique et/ou une signature issue d'un élément numérique. Le processeur de traitement sécurisé 35 met en oeuvre les étapes du procédé de traitement de données de signatures d'éléments numériques, pour obtenir une structure de données dans laquelle une signature est présente, selon les instructions du programme d'ordinateur 36 pour obtenir un ensemble de résultats de comparaisons de signatures pouvant être agrégés au sein d'une structure de données de réponse. Pour cela, le dispositif électronique de traitement de données de signatures comprend, outre la mémoire 34, des moyens de communications, tels que des modules de communication réseau 37 et des circuits de transmission de données entre les divers composants du dispositif électronique de traitement de données. Ces moyens peuvent être des moyens généraux ou des moyens dédiés. Par exemple les moyens d'extraction de caractéristiques, par l'intermédiaire d'un réseau de neurones peuvent se présenter sous la forme d'une unité de calcul dédiée et architecturée pour la mise en oeuvre de traitements d'intelligence artificielle.

### Procédé de mise en oeuvre.

Comme explicité précédemment, un objet de la divulgation est de permettre à un dispositif électronique appartenant à un groupe (par exemple un groupe de banques, d'assurances, d'états ou bien encore de smartphones, d'ordinateurs, etc.) de disposer d'une réponse (positive, négative, probabiliste, ...) à la requête représentant la présence d'une donnée sensible dans une base de données d'un autre dispositif électronique du groupe, tout en ne permettant pas au dispositif requérant, non seulement de savoir quels dispositifs ont répondu à la requête, mais également quels dispositifs ont répondu positivement à celle-ci. Réciproquement, l'anonymat du requérant est garanti.

Dans le cas d'une banque, par exemple, la requête pour savoir si une donnée d'identité est présente au sein d'une base d'une banque (concurrente) ne doit pas permettre au dispositif électronique de la banque requérante de déterminer quels sont les dispositifs électroniques des autres banques qui ont fourni l'information, ni la nature de l'information fournie.

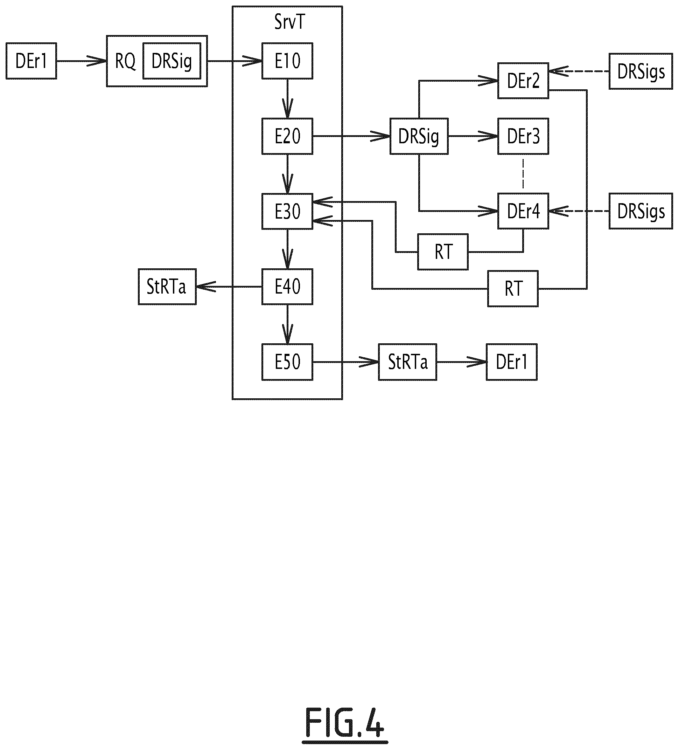

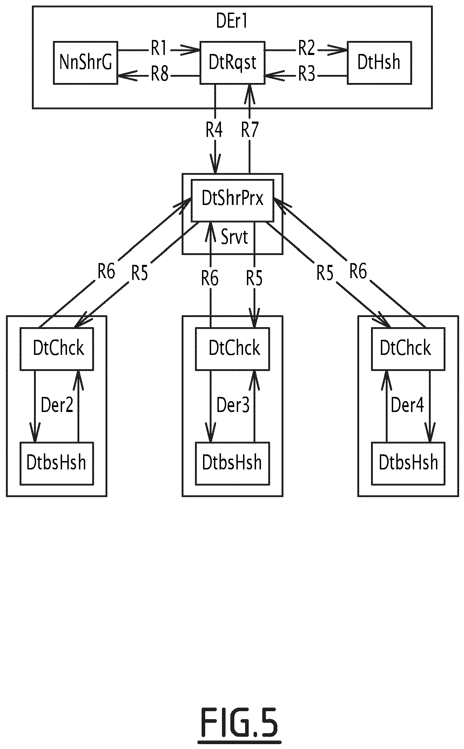

Pour résoudre ce problème technique, la divulgation expose le procédé suivant. Ce procédé est décrit en relation avec les figures 4 et 5. La figure 4 expose le procédé tel que mis en oeuvre au sein d'un serveur de traitement SrvT :
- une étape de réception E10 d'une requête RQ, en provenance d'un dispositif électronique requérant DEr1 connecté au réseau de communication Ntwk, ladite requête RQ portant sur l'élément numérique DRSig (soit la requête comprend l'élément numérique, soit la requête comprend la signature de l'élément numérique ; si la requête comprend l'élément numérique, le serveur effectue une transformation de l'élément numérique en signature, comme explicité supra) ;
- une étape de diffusion E20, auprès d'une pluralité de dispositifs électroniques répondants DEr2, DEr3, DEr4, connectés au réseau de communication, d'une signature dudit élément numérique DRSig (lors de l'usage du protocole PSI, une multitude de requêtes avec des morceaux de la signature dudit élément numérique DRSig est diffuée) ;
- une étape de réception E30, en provenance des dispositifs électroniques répondant DEr2, DEr3, DEr4, des réponses RT issues d'une comparaison entre la signature dudit élément numérique DRSig et au moins une signature d'éléments numériques DRSigs en possession des dispositifs électroniques répondant ;
- une étape d'agrégation E40 de l'ensemble des réponses RT au sein d'une structure de données de réponse agrégée StRTa ;
- une étape de transmission E50 de la structure de données de réponse agrégée audit dispositif électronique requérant.

Grâce à la mise en oeuvre de ce procédé, il est ainsi possible d'anonymiser tant la transmission de requêtes d'interrogation que la transmission de réponses. En d'autres termes, grâce à ce procédé, le dispositif requérant n'est pas en mesure de savoir quels sont les dispositifs répondants qui lui fournissent les réponses attendues tandis que les dispositifs répondants ne sont pas en mesure de savoir quel est le dispositif requérant qui les a interrogés. Seul le serveur de traitement SrvT, qui effectue l'intermédiation, est en mesure de connaitre ces informations. Le procédé est ainsi, au moins en partie, mis en oeuvre au sein d'un serveur de traitement indépendant des dispositifs du groupe. Par ailleurs, comme indiqué précédemment, les signatures qui sont transmises aux dispositifs électroniques répondants sont également anonymisées. Plus particulièrement, le dispositif électronique répondant ne reçoit pas une donnée en clair, mais une signature (correspondant à l'élément numérique anonymisé). Plusieurs exemples d'anonymisation d'éléments numériques sont présentés par la suite. Compte tenu du fait que cette signature reçue est anonyme, le dispositif électronique répondant n'est pas en mesure de découvrir (facilement) à quel élément numérique cette donnée correspond. Par exemple, si l'on suppose que la requête porte sur la connaissance d'un visage, la donnée transmise au dispositif électronique répondant n'est pas un fichier numérique du visage lui-même, mais une représentation de ce visage. Cette représentation est une signature du visage, qui tient lieu de question formulée : ce visage est-il connu de l'un ou de plusieurs dispositifs électroniques répondants. Par exemple, si l'on suppose que la requête porte sur la connaissance d'une voix, la donnée transmise au dispositif électronique répondant n'est pas un fichier vocal, mais une représentation de la voix du locuteur. Cette représentation est une signature vocale du locuteur qui tient lieu de question formulée.

Dans un exemple de réalisation, chaque dispositif électronique du groupe DEr1, DEr2, DEr3, DEr4 dispose d'une architecture de composants similaire permettant, d'une part, de répondre aux requêtes formulées par le serveur de traitement SrvT et, d'autre part, de formuler des questions au serveur de traitement SrvT.

Un exemple de mise en oeuvre au sein du système est illustré à la figure 5 qui décrit les étapes du procédé de requêtage au sein d'un groupe comprenant une pluralité de dispositifs électroniques en relation avec le système de la figure 1. Dans cette implémentation, une application, marquée NnShrG sur la figure 5, est déployée sur chaque dispositif du groupe. Le composant DtShrPrx est quant à lui déployé sur une infrastructure distante (le serveur de traitement SrvT). Les applications NnShrG sont identiques pour les différents dispositifs électroniques du groupe. Elles offrent une interface qui permet de piloter les composants susmentionnés (à l'exception du DtShrPrx qui est indépendant et assure l'interconnexion entre les dispositifs électroniques).

On suppose, bien entendu, qu'en amont, une base de données de signatures a été créée pour chaque dispositif électronique, à l'aide d'éléments numériques (sensibles) que chacun de ces dispositifs électroniques souhaite partager : les éléments numériques sont sélectionnés, puis pour chacun d'entre eux, le composant DtbsHsh effectue une demande d'anonymisation auprès du composant DtHsh. Le composant DtHsh génère une signature pour chaque élément numérique transmis et la retourne au composant DtbsHsh. Le composant DtbsHsh stocke les signatures sur la base de données de signatures propre au composant.

Dans cet exemple de réalisation, le mécanisme de requête au sein du groupe se décompose de la manière suivante :

| | |
|---|---|
| R1. | un dispositif électronique DEr1 reçoit une sélection, en provenance de l'application NnShrG, d'un élément numérique à vérifier et demande au composant DtRqst la transmission d'une requête de vérification à destination du groupe ; |
| R2. | le composant DtRqst requiert auprès du composant DtHsh, la génération d'une signature permettant d'anonymiser l'élément numérique à vérifier ; |
| R3. | le composant DtHsh procède à la génération d'une signature et la renvoie au composant DtRqst ; |
| R4. | le composant DtRqst transmet la requête de vérification au serveur de traitement SrvT (implémentant le composant DtShrPrx) en joignant à son message seulement la signature de l'élément numérique à vérifier, c'est-à-dire sans joindre l'élément numérique lui-même ; |
| R5. | le composant DtShrPrx du serveur de traitement diffuse la demande vers les composants DtChck des différents dispositifs électroniques du groupe Der2, Der3, Der4 ; |
| R6. | pour chaque dispositif électronique, le composant DtChck récupère la base de données de signatures interne générée par le composant DtbsHsh et procède à la comparaison de la signature à vérifier avec les différentes signatures de sa base de données. La vérification des signatures peut s'effectuer de manière indirecte. A l'issue de cette étape le résultat de la vérification est fourni au composant DtShrPrx (vrai, faux, valeur probabiliste réelle) ; |
| R7. | le composant DtShrPrx agrège les réponses des différents dispositifs électroniques du groupe et transmet le résultat agrégé au composant DtRqst du dispositif électronique ayant émis la requête ; |
| R8. | le résultat de la requête est remonté dans l'application dédiée NnShrG. |

### Détermination d'un degré d'anonymisation

Une caractéristique importante de la divulgation consiste à convenir, pour le groupe de dispositifs, d'un niveau (degré) d'anonymisation des éléments numériques à comparer. Trois solutions sont envisageables, sur la base des composants présentés précédemment, de manière à pouvoir ajuster ce niveau d'anonymisation en fonction des contraintes opérationnelles. Ces trois solutions sont présentées dans un ordre croissant de garantie de l'anonymisation des éléments numériques partagés. Pour chacune de ces solutions on ne détaille que les spécificités par rapport aux composants précédemment décrits.

### Distance entre signatures robustes transmises en clair sur le réseau

Au sein du composant DtChck, un calcul de distance entre la signature (un hash) de l'élément numérique de requête et la signature de chacun des éléments numériques de la base de données de signature est réalisé. Une distance de Hamming entre les vecteurs de bits de deux signatures est par exemple utilisé. Dans cette situation, le DtShrPrx transmet en clair la signature de l'élément numérique de requête aux dispositifs électroniques répondants. Un seuillage sur les distances est appliqué pour déterminer s'il existe un appariement avec une des signatures de la base interne. Si c'est le cas, une réponse positive, par exemple binaire (« oui cette donnée sensible a déjà été vue ») est renvoyée. Une réponse probabiliste peut également être transmise. Le choix du seuil est effectué de manière à limiter les faux positifs.

Cette solution est celle qui permet d'offrir un maximum de robustesse face aux variations de forme des éléments numériques à vérifier au sein du groupe. A contrario c'est celle dont le niveau de garantie d'anonymisation des éléments numériques est le moins élevé. En effet, la transmission en clair de la signature induit un risque de rétro-engineering de la solution qui pourrait permettre de remonter à la donnée source par un dispositif qui parviendrait à écouter les communications réseaux entre le DtShrPrx et les dispositifs du groupe. On note cependant que l'introduction de l'étape de « Data Augmentation » avec construction d'une signature par agrégation de signatures individuelles réduit ce risque (voir infra).

Cette solution présente également un autre risque sur la garantie d'anonymisation dans la mesure où le composant DtChck, effectuant seul les comparaisons entre signatures en clair, a la possibilité de déterminer quelle donnée a été partagée dès lors qu'il y a un appariement identifié (positif) avec une des données de sa propre base interne : en d'autres termes, le composant sait pour quel élément numérique on l'interroge lorsqu'il y a un appariement.

### Distance entre signatures robustes, modifiées, transmises en clair sur le réseau

Au sein du composant DtHsh, un mécanisme de modification des signatures générées est adjoint en post-traitement (pour anonymiser encore ces signatures). Ce mécanisme consiste à introduire des modifications aléatoires dans le vecteur de bits correspondant à une signature. La signature transmise aux autres dispositifs du groupe n'est donc pas exactement la signature générée, mais une signature aléatoirement modifiée.

Au sein du composant DtChck, de manière similaire à ce qui a été mis en place pour la première solution, un calcul de distance entre la signature de l'élément numérique de requête et la signature de chacun des éléments numériques de la base interne est réalisé. Cependant les signatures à comparer étant modifiées, le calcul de distance est ajusté en conséquence. Les distances calculées sont ainsi plus élevées du fait des modifications introduites dans la signature d'origine. Pour ce faire, pour chaque signature de la base interne avec laquelle comparer la signature de requête, une distance est calculée (par exemple de Hamming) entre la signature finale/agrégée de requête et la signature de chacune des transformations appliquées aux éléments numériques internes de la base de données. On obtient ainsi une distribution de distances. Un algorithme de détection d'anomalies (par exemple de type « isolation forest ») est ensuite appliqué pour voir si la distribution de distances associée à l'une des signatures de la base interne est statistiquement différente des autres, avec une distance moyenne plus faible que les autres. Si tel est le cas on considère qu'il y a bien un appariement observé (avec une probabilité donnée).

Cette solution est moins robuste que la première aux variations de forme, mais l'introduction de modifications dans les signatures permet de réduire l'exposition au risque de retro-engineering de ces signatures, qui restent néanmoins transmises en clair sur le réseau. Des résultats expérimentaux indiquent qu'il est possible d'introduire jusqu'à 12,5% de modifications aléatoires de la signature sans affecter significativement les performances d'appariement. En revanche le risque face à des dispositifs du groupe malveillants est toujours présent dans la mesure où chaque dispositif peut savoir quelle donnée a été transmise dès lors qu'un appariement est observé.

### Appariement exact de signatures robustes via un protocole d'échange

### cryptographique

Au sein du composant DtChck, la vérification de l'appariement entre la signature de la requête et les signatures des éléments numériques de la base interne à laquelle le composant DtChck a accès n'est pas réalisé directement par DtChck. Un échange de données cryptographiques, exploitant un protocole de type PSI (de l'anglais pour « Private Set Intersection ») est mis en place entre le composant DtShrPrx et le composant DtChck de chaque dispositif du groupe pour réaliser cette vérification. Avec ce protocole, la signature de la requête n'est pas transmise en clair par le composant DtShrPrx. Ce protocole, qui permet de ne pas transmettre la signature en clair, offre ainsi un niveau de garantie d'anonymisation supplémentaire par rapport aux deux solutions décrites précédemment. D'une part, il n'est pas possible, pour un dispositif électronique requérant, d'effectuer une ingénierie inverse de données, puisque la signature ne sera jamais transmise en clair. D'autre part, la vérification n'étant pas réalisée au niveau du composant DtChck, celui-ci n'a pas moyen de savoir quel élément de la base de données a conduit à un appariement avec la requête.

En contrepartie, l'utilisation de ce protocole implique que deux signatures soient exactement les mêmes pour qu'il y ait appariement. Il n'est pas possible d'effectuer un calcul de distance. In fine cela se traduit par une tolérance moindre pour des variations de forme entre les éléments numériques que l'on cherche à apparier.

### Exemple d'anonymisation de données d'images

On exemplifie, dans cette section, l'obtention d'une signature anonyme de données d'images. Le cas d'espèce auquel cet exemple se rapporte est le suivant : un des membres du groupe reçoit, de la part d'un prospect, des données d'identité comprenant une image. Ces données d'identité doivent faire l'objet d'une vérification pour estimer la probabilité d'une éventuelle tentative de fraude. Le procédé objet de la divulgation est mis en oeuvre pour obtenir, auprès des autres membres du groupe, une donnée représentative d'une connaissance d'une fraude passée en lien avec cette identité, sur la base de l'image. Cette image est donc convertie en une signature selon l'exemple décrit ici.

### Deux procédés, essentiellement, peuvent être mis en oeuvre.

Le premier procédé consiste en une extraction de signature sur la base d'un réseau de neurones. Dans cette situation, l'image à disposition du dispositif électronique requérant est normalisée (prétraitée) et une extraction de caractéristiques basée sur un réseau de neurones (par exemple un réseau de neurones convolutif CNN) est mise en oeuvre. Cette extraction délivre un vecteur caractéristique de l'image prétraitée (qui comprend une pluralité de valeurs réelles). La taille de ce vecteur caractéristique est adaptée aux besoins (par exemple 128 valeurs). Ce vecteur caractéristique est ensuite multiplié par une matrice de hachage, dont la taille est également adaptée aux besoins. Cette matrice comprend également une pluralité de valeurs réelles, adaptées aux caractéristiques extraites. Un vecteur caractéristique haché est ainsi obtenu. Ce vecteur comprend à nouveau une pluralité de valeurs réelles. Le vecteur caractéristique haché subit ensuite un hachage binaire (seules les valeurs supérieures à 0 sont retenues) pour obtenir un vecteur caractéristique binaire. Ce vecteur caractéristique binaire constitue la signature qui est utilisée pour comparaison avec les signatures à la disposition des autres dispositifs électroniques du groupe.

Le deuxième procédé consiste en une réalisation d'une pluralité de phases d'augmentation de données, sur la base de l'image initialement fournie au soutien de l'identité du prospect. Le procédé comprend une première phase au cours de laquelle un vecteur caractéristique de l'image initiale est fournie à un algorithme d'extraction de caractéristique (dans l'exemple d'implémentation, l'algorithme « vggface2 » est utilisé car on ne s'intéresse qu'aux visages présents sur les documents d'identité). A l'issue de cette première phase, un premier vecteur caractéristique de taille donnée (par exemple de 512 valeurs) est obtenu. Puis le procédé comprend une pluralité de phases d'augmentation. Chaque phase d'augmentation comprend :
- Une étape d'application, sur l'image initiale, d'une transformation aléatoire disponible parmi une pluralité de transformations (par exemple une rotation, une bascule horizontale ou verticale, modification de couleur, passage en niveau de gris, flou gaussien) délivrant une image modifiée ;
- Une étape d'application, sur l'image modifiée, de l'algorithme d'extraction de caractéristiques, délivrant un vecteur caractéristique de l'image modifiée.

L'ensemble des vecteurs caractéristiques obtenus (dont le nombre varie en fonction du nombre de transformations aléatoires subies) est alors traité pour obtenir un vecteur caractéristique moyenné. Chaque valeur est moyennée avec la valeur correspondante de chaque vecteur caractéristique des différentes images modifiées. Ce vecteur caractéristique moyenné est ensuite multiplié par une matrice de hachage, dont la taille est également adaptée aux besoins. Cette matrice comprend une pluralité de valeurs réelles, adaptées aux caractéristiques extraites. Un vecteur caractéristique haché est ainsi obtenu. Ce vecteur comprend à nouveau une pluralité de valeurs réelles. Le vecteur caractéristique haché subit ensuite un hachage binaire (seules les valeurs supérieures à 0 sont retenues) pour obtenir un vecteur caractéristique binaire. Ce vecteur caractéristique binaire constitue la signature qui est utilisée pour comparaison avec les signatures à la disposition des autres dispositifs électroniques du groupe. Comparativement à la première méthode d'obtention de signature, la seconde permet de disposer de signatures plus « larges », car représentant mieux les caractéristiques réelles du visage de l'image, caractéristiques plus robustes aux variations de forme.

Dans ce qui vient d'être présenté, le traitement d'une signature de l'élément numérique qui est réalisé par le dispositif de traitement est un traitement particulier.

En effet, c'est un traitement permettant à un dispositif électronique requérant DEr1 appartenant à un groupe de dispositifs électroniques DEr1, DEr2, DEr3, DEr4, de disposer d'une réponse à une requête RQ portant sur la présence d'un élément numérique dans au moins une base de données d'un autre dispositif électronique du groupe DEr2, DEr3 et DEr4.

## Revendications

1. Procédé de permettant à un dispositif électronique requérant (DEr1) appartenant à un groupe de dispositifs électroniques (DEr1, DEr2, DEr3, DEr4), de disposer d'une réponse à une requête (RQ) portant sur la présence d'un élément numérique dans au moins une base de données d'un autre dispositif électronique du groupe (DEr2, DEr3, DEr4), le procédé mis en oeuvre par un dispositif électronique de traitement (SrvT) qui est connecté à un réseau de communication auquel le groupe de dispositifs électroniques (DEr1, DEr2, DEr3, DEr4) est également connecté, le dispositif électronique de traitement étant indépendant du groupe de dispositifs électroniques (DEr1, DEr2, DEr3, DEr4), ledit procédé comprenant :
- une étape de réception (E10) de la requête (RQ) par le dispositif électronique de traitement (SrvT), en provenance du dispositif électronique requérant (DEr1),
- une étape de diffusion (E20) par le dispositif électronique de traitement (SrvT), auprès d'une pluralité de dispositifs électroniques répondants (DEr2, DEr3, DEr4) connectés au réseau de communication, d'une signature (DRSig) dudit élément numérique,
- une étape de réception (E30) par le dispositif électronique de traitement (SrvT), en provenance des dispositifs électroniques répondants, de réponses (RT) issues d'une comparaison entre la signature dudit élément numérique (DRSig) et au moins une signature d'éléments numériques (DRSig) en possession dudit au moins un dispositif électronique répondant,
- une étape d'agrégation (E40) par le dispositif électronique de traitement (SrvT) de l'ensemble des réponses (RT) au sein d'une structure de données de réponse agrégée (StRTa), et
- une étape de transmission (E50) par le dispositif électronique de traitement (SrvT), de la structure de données de réponse agrégée audit dispositif électronique requérant (DEr1).

2. Procédé selon la revendication 1, dans lequel ladite signature dudit élément numérique (DRSig) se présente sous la forme d'une chaine de caractères.

3. Procédé selon la revendication 1, le procédé comprenant, en outre, une étape de préparation de ladite signature dudit élément numérique (DRSig) comprenant :
- une étape d'extraction de caractéristiques à partir dudit élément numérique, délivrant un vecteur caractéristique ;
- une étape de multiplication dudit vecteur caractéristique par une matrice de hachage prédéterminée, délivrant un vecteur caractéristique haché, et
- une étape de hachage binaire dudit vecteur caractéristique haché délivrant un vecteur caractéristique binaire, ce vecteur caractéristique binaire constituant ladite signature dudit élément numérique (DRSig).

4. Procédé selon la revendication 3, dans lequel l'étape d'extraction de caractéristiques à partir dudit élément numérique comprend :
- une pluralité d'étapes de modification dudit élément numérique, chaque étape délivrant un élément numérique modifié,
- une étape d'extraction de caractéristiques à partir de chacun des éléments numériques modifiés, délivrant un ensemble de vecteurs caractéristiques modifiés, et
- une étape de calcul d'un vecteur caractéristique global en agrégeant chacun des vecteurs caractéristiques modifiés.

5. Procédé selon la revendication 1, dans lequel la comparaison entre la signature dudit élément numérique (DRSig) et ladite au moins une signature d'éléments numériques (DRSigs) dudit au moins un dispositif électronique répondant comprend le calcul d'une distance entre la signature dudit élément numérique (DRSig) et ladite au moins une signature d'éléments numériques (DRSigs) en possession dudit au moins un dispositif électronique répondant.

6. Procédé selon la revendication 5, dans lequel la distance calculée est une distance de Hamming.

7. Procédé selon la revendication 1, dans lequel la comparaison entre la signature dudit élément numérique (DRSig) et ladite au moins une signature d'éléments numériques (DRSigs) dudit au moins un dispositif électronique répondant est mise en oeuvre en utilisant un protocole de type ensemble privé intersection (PSI).

8. Procédé selon la revendication 1, dans lequel ledit élément numérique appartient au groupe comprenant : une image numérique, une vidéo, un extrait sonore et un texte.

9. Dispositif électronique de traitement (SrvT) permettant à un dispositif électronique requérant (DEr1) appartenant à un groupe de dispositifs électroniques (DEr1, DEr2, DEr3, DEr4), de disposer d'une réponse à une requête (RQ) portant sur la présence d'un élément numérique dans au moins une base de données d'un autre dispositif électronique du groupe (DEr2, DEr3, DEr4), le dispositif électronique de traitement comprenant :
- des moyens de réception d'une requête, en provenance du dispositif électronique requérant (DEr1),
- des moyens de diffusion, auprès d'une pluralité de dispositifs électroniques répondants connectés au réseau de communication, d'une signature dudit élément numérique,
- des moyens de réception, en provenance d'au moins un dispositif électronique répondant, d'au moins une réponse issue d'une comparaison entre la signature dudit élément numérique et au moins une signature d'éléments numériques en possession dudit au moins un dispositif électronique répondant,
- des moyens d'agrégation de l'ensemble des réponses au sein d'une structure de données de réponse agrégée, et
- des moyens de transmission de la structure de données de réponse agrégée audit dispositif électronique requérant.

10. Programme d'ordinateur comportant des instructions logicielles qui, lorsqu'elles sont exécutées par un dispositif électronique programmable, mettent en oeuvre un procédé de traitement conforme aux revendications 1 à 8.

## Revendications modifiées

### Revendications modifiées conformément à la règle 137(2) CBE.

1. Procédé permettant à un dispositif électronique requérant (DEr1) appartenant à un groupe de dispositifs électroniques (DEr1, DEr2, DEr3, DEr4), de disposer d'une réponse à une requête (RQ) portant sur la présence d'un élément numérique dans au moins une base de données d'un autre dispositif électronique du groupe (DEr2, DEr3, DEr4), le procédé mis en œuvre par un dispositif électronique de traitement (SrvT) qui est connecté à un réseau de communication auquel le groupe de dispositifs électroniques (DEr1, DEr2, DEr3, DEr4) est également connecté, le dispositif électronique de traitement étant indépendant du groupe de dispositifs électroniques (DEr1, DEr2, DEr3, DEr4), ledit procédé comprenant :
- une étape de réception (E10) de la requête (RQ) par le dispositif électronique de traitement (SrvT), en provenance du dispositif électronique requérant (DEr1),
- une étape de diffusion (E20) par le dispositif électronique de traitement (SrvT), auprès d'une pluralité de dispositifs électroniques répondants (DEr2, DEr3, DEr4) connectés au réseau de communication, d'une signature (DRSig) dudit élément numérique,
- une étape de réception (E30) par le dispositif électronique de traitement (SrvT), en provenance des dispositifs électroniques répondants, de réponses (RT) issues d'une comparaison entre la signature dudit élément numérique (DRSig) et au moins une signature d'éléments numériques (DRSig) en possession dudit au moins un dispositif électronique répondant,
- une étape d'agrégation (E40) par le dispositif électronique de traitement (SrvT) de l'ensemble des réponses (RT) au sein d'une structure de données de réponse agrégée (StRTa), et
- une étape de transmission (E50) par le dispositif électronique de traitement (SrvT), de la structure de données de réponse agrégée audit dispositif électronique requérant (DEr1).

2. Procédé selon la revendication 1, dans lequel ladite signature dudit élément numérique (DRSig) se présente sous la forme d'une chaine de caractères.

3. Procédé selon la revendication 1, le procédé comprenant, en outre, une étape de préparation de ladite signature dudit élément numérique (DRSig) comprenant :
- une étape d'extraction de caractéristiques à partir dudit élément numérique, délivrant un vecteur caractéristique ;
- une étape de multiplication dudit vecteur caractéristique par une matrice de hachage prédéterminée, délivrant un vecteur caractéristique haché, et
- une étape de hachage binaire dudit vecteur caractéristique haché délivrant un vecteur caractéristique binaire, ce vecteur caractéristique binaire constituant ladite signature dudit élément numérique (DRSig).

4. Procédé selon la revendication 3, dans lequel l'étape d'extraction de caractéristiques à partir dudit élément numérique comprend :
- une pluralité d'étapes de modification dudit élément numérique, chaque étape délivrant un élément numérique modifié,
- une étape d'extraction de caractéristiques à partir de chacun des éléments numériques modifiés, délivrant un ensemble de vecteurs caractéristiques modifiés, et
- une étape de calcul d'un vecteur caractéristique global en agrégeant chacun des vecteurs caractéristiques modifiés.

5. Procédé selon la revendication 1, dans lequel la comparaison entre la signature dudit élément numérique (DRSig) et ladite au moins une signature d'éléments numériques (DRSigs) dudit au moins un dispositif électronique répondant comprend le calcul d'une distance entre la signature dudit élément numérique (DRSig) et ladite au moins une signature d'éléments numériques (DRSigs) en possession dudit au moins un dispositif électronique répondant.

6. Procédé selon la revendication 5, dans lequel la distance calculée est une distance de Hamming.

7. Procédé selon la revendication 1, dans lequel la comparaison entre la signature dudit élément numérique (DRSig) et ladite au moins une signature d'éléments numériques (DRSigs) dudit au moins un dispositif électronique répondant est mise en œuvre en utilisant un protocole de type ensemble privé intersection (PSI).

8. Procédé selon la revendication 1, dans lequel ledit élément numérique appartient au groupe comprenant : une image numérique, une vidéo, un extrait sonore et un texte.

9. Dispositif électronique de traitement (SrvT) permettant à un dispositif électronique requérant (DEr1) appartenant à un groupe de dispositifs électroniques (DEr1, DEr2, DEr3, DEr4), de disposer d'une réponse à une requête (RQ) portant sur la présence d'un élément numérique dans au moins une base de données d'un autre dispositif électronique du groupe (DEr2, DEr3, DEr4), le dispositif électronique de traitement comprenant :
- des moyens de réception d'une requête, en provenance du dispositif électronique requérant (DEr1),
- des moyens de diffusion, auprès d'une pluralité de dispositifs électroniques répondants connectés au réseau de communication, d'une signature dudit élément numérique,
- des moyens de réception, en provenance d'au moins un dispositif électronique répondant, d'au moins une réponse issue d'une comparaison entre la signature dudit élément numérique et au moins une signature d'éléments numériques en possession dudit au moins un dispositif électronique répondant,
- des moyens d'agrégation de l'ensemble des réponses au sein d'une structure de données de réponse agrégée, et
- des moyens de transmission de la structure de données de réponse agrégée audit dispositif électronique requérant.

10. Programme d'ordinateur comportant des instructions logicielles qui, lorsqu'elles sont exécutées par un dispositif électronique programmable, mettent en œuvre un procédé de traitement conforme aux revendications 1 à 8.
